# EUROPEAN PATENT APPLICATION

(11) **EP 2 930 045 A1**
(43) Date of publication of application: **14.10.2015**
(21) Application number: 13860577.9
(22) Date of filing: 22.10.2013
(51) Int. Cl.: B60K 20/02, G05G 1/02

(54) **SHIFT DEVICE**

(30) Priority: 07.12.2012 JP 2012268703
(71) Applicant: Kabushiki Kaisha Tokai Rika Denki Seisakusho, Ohguchi-cho Niwa-gun Aichi 480-0195 (JP)
(72) Inventor: NAKANO, Yohei, Niwa-gun Aichi 480-0195 (JP)
(74) Representative: TBK
(86) International application number: PCT/JP2013/078628
(87) International publication number: WO 2014/087754

(57) **Abstract**

In a shift device, the fingers of a driver are guided to a "D" switch side by a right guide face, a right front guide face, and a right rear guide face of a guide body, are guided to an "N" switch side by a front guide face, the right front guide face, and a left front guide face of the guide body, and are guided to an "R" switch side by a rear guide face, the right rear guide face, and a left rear guide face of the guide body. This thereby enables the driver to easily identify the positions of the "D" switch, the "N" switch, and the "R" switch, and enables incorrect operation of the "D" switch, the "N" switch, and the "R" switch to be suppressed.

## Description

### Technical Field

The present invention relates to a shift device in which switches are operated to change a shift range of a transmission.

### Background Art

A shift device described in the specification of European Patent Application Laid-Open No. 1167831 is provided with plural buttons, and the buttons are operated to change the shift range of an automatic vehicle transmission.

In this shift device, the plural buttons are installed in the same plane as each other, and the plural buttons are configured with different shapes to each other in order to suppress incorrect operation of the buttons.

### SUMMARY OF INVENTION

### Technical Problem

In consideration of the above circumstances, an object of the present invention is to obtain a shift device capable of suppressing incorrect operation of switches.

### Solution to Problem

A shift device of a first aspect of the present invention includes a plurality of switches that are operated to change a shift range of a transmission; and a guide portion capable of guiding a hand to respective sides of the plurality of switches.

In the shift device of the first aspect of the present invention, the switches are operated to change the shift range of the transmission.

The guide portion is capable of guiding the hand to the respective sides of the plural switches. The guide portion thereby enables easy identification of the positions of the plural switches, enabling incorrect operation of the switches to be suppressed.

A shift device of a second aspect of the present invention is the shift device of the first aspect of the present invention, wherein the switch is installed at a periphery of the guide portion.

In the shift device of the second aspect of the present invention, the switch is installed at the periphery of the guide portion. The guide portion thereby enables even easier identification of the positions of the plural switches, enabling incorrect operation of the switches to be further suppressed.

A shift device of a third aspect of the present invention is the shift device of the first aspect or the second aspect of the present invention, wherein the switches are installed at one side and another side of the guide portion.

In the shift device of the third aspect of the present invention, the switches are installed at the one side and the other side of the guide portion. This thereby enables the switches on the one side and the other side of the guide portion to be distinguished easily, enabling incorrect operation of the switches to be suppressed.

A shift device of a fourth aspect of the present invention is the shift device of any one of the first aspect to the third aspect of the present invention, wherein the switch is operated toward a side of the guide portion, or is operated toward a side that is opposite to the guide portion.

In the shift device of the fourth aspect of the present invention, the switch is operated toward the side of the guide portion, or operated toward the side that is opposite to the guide portion. This thereby enables incorrect operation of the switch to be suppressed, since any force exerted by the hand toward the side of the guide portion, or toward the side that is opposite to the guide portion when the hand approaches the guide portion from the front side of the guide portion is small.

A shift device of a fifth aspect of the present invention is the shift device of any one of the first aspect to the fourth aspect of the present invention, further includes an additional guide portion that is provided at a periphery of the switch, and that is capable of guiding the hand to a side of the switch.

In the shift device of the fifth aspect of the present invention, the additional guide portion is provided at the periphery of the switch, and the additional guide portion is capable of guiding the hand to the side of the switch. The additional guide portion thereby enables even easier identification of the position of the switch, enabling incorrect operation of the switch to be further suppressed.

A shift device of a sixth aspect of the present invention is the shift device of any one of the first aspect to the fifth aspect of the present invention, wherein the plural switches are installed around a peripheral direction of the guide portion.

In the shift device of the sixth aspect of the present invention, the plural switches are installed around the peripheral direction of the guide portion. It is accordingly necessary to turn the whole hand, or a specific finger, in the peripheral direction of the guide portion in order to operate the plural switches with the specific finger, thereby enabling incorrect operation of the switches to be suppressed.

### BRIEF DESCRIPTION OF DRAWINGS

Fig. 1 is a perspective view illustrating a shift device according to a first exemplary embodiment of the present invention, as viewed diagonally from the rear right of a vehicle.
Fig. 2 is a perspective view illustrating a shift device according to a second exemplary embodiment of the present invention, as viewed diagonally from the rear right of a vehicle.
Fig. 3 is a perspective view illustrating a shift device according to a third exemplary embodiment of the present invention, as viewed diagonally from the rear left of a vehicle.

### DESCRIPTION OF EMBODIMENTS

### First Exemplary Embodiment

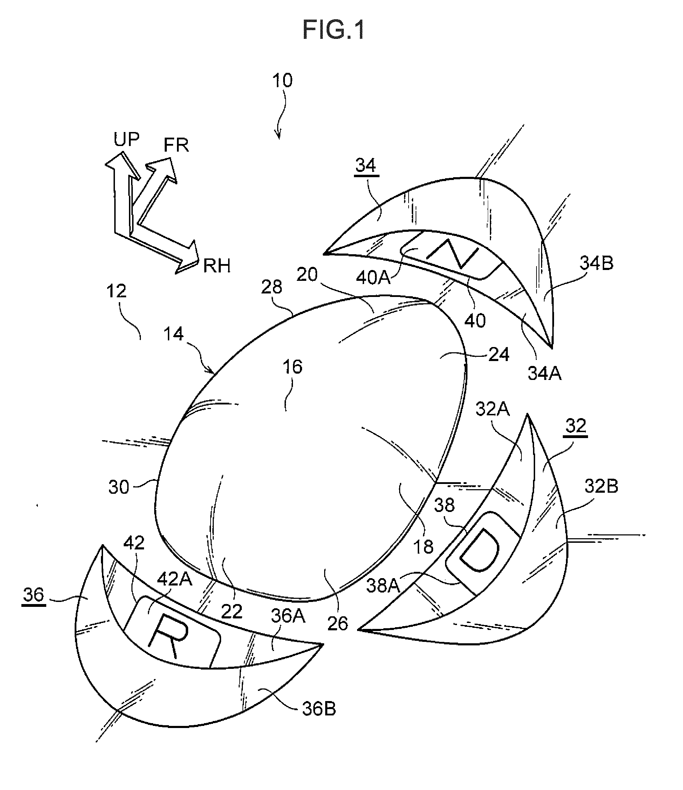

Fig. 1 is a perspective view illustrating a shift device 10 according to a first exemplary embodiment of the present invention, as viewed diagonally from the rear right of a vehicle. Note that in the drawings, the arrow FR indicates the vehicle front, the arrow RH indicates the right of the vehicle, and the arrow UP indicates upwards.

The shift device 10 according to the present exemplary embodiment is applied to a right-hand drive vehicle. The steering wheel and the driving seat are disposed on the right side of the vehicle compartment of the vehicle.

As illustrated in Fig. 1, an installation face 12 is provided to an upper face (front face) of a floor section (for example a center console) of the vehicle compartment, to the vehicle left side (vehicle left-right direction inside) of the driving seat. The installation face 12 is disposed orthogonally to the up-down direction.

The shift device 10 includes a substantially hemispherical shaped guide body 14 serving as a guide portion. The guide body 14 is installed (fixed) to the installation face 12. The guide body 14 projects out upwards from the installation face 12, and a front face of the guide body 14 is configured with a substantially spherical face shape. An upper end portion (upper face) of the front face of the guide body 14 configures a placement face 16, and the placement face 16 is curved in a convex shape on which the palm of the left hand (a hand) of the driver (occupant) can be placed.

A vehicle right side face of the guide body 14 configures a right guide face 18 serving as a first guide portion. The right guide face 18 is curved in a convex shape. The right guide face 18 is inclined in a direction toward the lower side on progression toward the vehicle right side, and, for example, the driver can place the thumb (finger) on the right side of the palm of their left hand on the right guide face 18.

A vehicle front side face of the guide body 14 configures a front guide face 20 serving as a second guide portion. The front guide face 20 is curved in a convex shape. The front guide face 20 is inclined in a direction toward the lower side on progression toward the vehicle front side, and, for example, the driver can place a finger other than the thumb of their left hand (in particular the index finger, or the middle finger) on the front guide face 20.

A vehicle rear side face of the guide body 14 configures a rear guide face 22 serving as a third guide portion. The rear guide face 22 is curved in a convex shape. The rear guide face 22 is inclined in a direction toward the lower side on progression toward the vehicle rear side, and, for example, the driver can place their thumb positioned at the lower side of the palm of their left hand on the rear guide face 22, with such placement possible when the driver has turned the palm of their left hand toward the right side by approximately 90° to position the thumb at the rear side of the palm of their left hand.

A face of the guide body 14 on the diagonal right front side of the vehicle configures a right front guide face 24 serving as a fourth guide portion. The right front guide face 24 is curved in a convex shape. The right front guide face 24 is inclined in a direction toward the lower side on progression toward the diagonal right front side of the vehicle, and the right front guide face 24 connects together the right guide face 18 and the front guide face 20.

A diagonal right rear side of the vehicle face of the guide body 14 configures a right rear guide face 26 serving as a fifth guide portion. The right rear guide face 26 is curved in a convex shape. The right rear guide face 26 is inclined in a direction toward the lower side on progression toward the diagonal right rear side of the vehicle, and the right rear guide face 26 connects together the right guide face 18 and the rear guide face 22.

A face of the guide body 14 on the diagonal left front side of the vehicle configures a left front guide face 28 serving as a sixth guide portion. The left front guide face 28 is curved in a convex shape. The left front guide face 28 is inclined in a direction toward the lower side on progression toward the diagonal left front side of the vehicle, and the left front guide face 28 is connected to the front guide face 20.

A face of the guide body 14 on the diagonal left rear side of the vehicle configures a left rear guide face 30 serving as a seventh guide portion. The left rear guide face 30 is curved in a convex shape. The left rear guide face 30 is inclined in a direction toward the lower side on progression toward the diagonal left rear side of the vehicle, and the left rear guide face 30 is connected to the rear guide face 22.

The angle of inclination of a peripheral portion of the front face of the guide body 14 with respect to the horizontal plane becomes gradually greater from the vehicle front side toward the vehicle rear side, and in particular, the right guide face 18, the rear guide face 22, and the right rear guide face 26 have a large angle of inclination with respect to the horizontal plane, such that the guide body 14 is suppressed from obstructing movement of the thumb of the driver's left hand past the right rear guide face 26 between the right guide face 18 and the rear guide face 22.

In the vicinity of the vehicle right side (driver side) of the guide body 14, the installation face 12 is provided with a right recess portion 32 that is semicircular shaped in plan view, and serves as an additional guide portion (first additional guide portion). A dimension of the right recess portion 32 in the vehicle left-right direction gradually increases from both vehicle front-rear direction ends toward a central side. A bottom face of the right recess portion 32 is configured with a V-shaped cross-section profile, and is provided with a right inner face 32A on the vehicle left side, and a right outer face 32B on the vehicle right side. The right inner face 32A is curved in a convex shape, and the right outer face 32B is curved in a concave shape.

In the vicinity of the vehicle front side of the guide body 14, the installation face 12 is provided with a front recess portion 34 that is semicircular shaped in plan view, and serves as an additional guide portion (second additional guide portion). A dimension of the front recess portion 34 in the vehicle front-rear direction gradually increases from both vehicle left-right direction ends toward a central side. A bottom face of the front recess portion 34 is configured with a V-shaped cross-section profile, and is provided with a front inner face 34A on the vehicle rear side, and a front outer face 34B on the vehicle front side. The front inner face 34A is curved in a convex shape, and the front outer face 34B is curved in a concave shape.

In the vicinity of the vehicle rear side of the guide body 14, the installation face 12 is provided with a rear recess portion 36 that is semicircular shaped in plan view, and serves as an additional guide portion (third additional guide portion). A dimension of the rear recess portion 36 in the vehicle front-rear direction gradually increases from both vehicle left-right direction ends toward a central side. A bottom face of the rear recess portion 36 is configured with a V-shaped cross-section profile, and is provided with a rear inner face 36A on the vehicle front side, and a rear outer face 36B on the vehicle rear side. The rear inner face 36A is curved in a convex shape, and the rear outer face 36B is curved in a concave shape.

A "D" switch 38 (drive switch), serving as a switch, is installed at a vehicle front-rear direction central portion of the right inner face 32A of the right recess portion 32. A front face of the "D" switch 38 configures a "D" operation face 38A, serving as an operation face. The "D" operation face 38A is configured with a rectangular flat plane shape, and the "D" operation face 38A is disposed in the same plane as the right inner face 32A. The "D" operation face 38A of the "D" switch 38 is press-operable toward the side of the guide body 14, and the press-operation direction of the "D" switch 38 ("D" operation face 38A) is a diagonal downward direction toward the left of the vehicle (toward the vehicle left side and a horizontal direction side), with an inclination angle with respect to the horizontal plane set at 45° or less. The "D" switch 38 ("D" operation face 38A) is, for example, press-operable by the thumb positioned on the right side of the palm of the driver's left hand.

An "N" switch 40 (neutral switch), serving as a switch, is installed at a vehicle left-right direction central portion of the front inner face 34A of the front recess portion 34. A front face of the "N" switch 40 configures an "N" operation face 40A, serving as an operation face. The "N" operation face 40A is configured with a rectangular flat plane shape, and the "N" operation face 40A is disposed in the same plane as the front inner face 34A.
The "N" operation face 40A of the "N" switch 40 is press-operable toward the side of the guide body 14, and the press-operation direction of the "N" switch 40 ("N" operation face 40A) is a diagonal downward direction toward the rear of the vehicle (toward the vehicle rear side and a horizontal direction side), with an inclination angle with respect to the horizontal plane set at 45° or less. The "N" switch 40 ("N" operation face 40A) is, for example, press-operable by a finger other than the thumb of the driver's left hand (in particular the index finger, or the middle finger).

An "R" switch 42 (reverse switch), serving as a switch, is installed at a vehicle left-right direction central portion of the rear inner face 36A of the rear recess portion 36. A front face of the "R" switch 42 configures an "R" operation face 42A, serving as an operation face. The "R" operation face 42A is configured with a rectangular flat plane shape, and the "R" operation face 42A is disposed in the same plane as the rear inner face 36A. The "R" operation face 42A of the "R" switch 42 is press-operable toward the side of the guide body 14, and the press-operation direction of the "R" switch 42 ("R" operation face 42A) is a diagonal downward direction toward the front of the vehicle (toward the vehicle front side and a horizontal direction side), with an inclination angle with respect to the horizontal plane set at 45° or less. The "R" switch 42 ("R" operation face 42A) is, for example, press-operable by the thumb positioned at the lower side of the palm of the driver's left hand, and is press-operable by the thumb when the driver has turned the palm of their left hand toward the right side by approximately 90° to position the thumb at the rear side.

The "D" switch 38, the "N" switch 40, and the "R" switch 42 are electrically connected to an automatic transmission (not illustrated in the drawings) of the vehicle. Press-operation of the "D" switch 38, the "N" switch 40, and the "R" switch 42 respectively places a shift range of the automatic transmission in a "D" range (drive range), an "N" range (neutral range), and an "R" range (reverse range). When the shift range of the automatic transmission is placed in the "D" range, forward drive force is transmitted to the vehicle wheels. When the shift range of the automatic transmission is placed in the "N" range, transmission of drive force to the vehicle wheels is cut off. When the shift range of the automatic transmission is placed in the "R" range, reverse drive force is transmitted to the vehicle wheels.

Next, explanation follows regarding operation of the present exemplary embodiment.

In the shift device 10 configured as described above, the "D" switch 38, the "N" switch 40, and the "R" switch 42 are respectively press-operated to change the shift range of the automatic transmission to the "D" range, the "N" range, and the "R" range.

During press-operation of the "D" switch 38 by the driver, the right guide face 18, the right front guide face 24, and the right rear guide face 26 of the guide body 14 guide the fingers of the left hand (for example the thumb, the index finger, or the middle finger) toward the "D" switch 38 side (toward the vehicle right side, the diagonal right front side of the vehicle, and the diagonal right rear side of the vehicle respectively) even if the driver does not look at the shift device 10.

During press-operation of the "N" switch 40 by the driver, the front guide face 20, the right front guide face 24, and the left front guide face 28 of the guide body 14 guide the fingers of the left hand (for example the index finger, or the middle finger) toward the "N" switch 40 side (toward the vehicle front side, the diagonal left front side of the vehicle, and the diagonal right front side of the vehicle respectively), even if the driver does not look at the shift device 10.

During press-operation of the "R" switch 42 by the driver, the rear guide face 22, the right rear guide face 26, and the left rear guide face 30 of the guide body 14 guide the fingers of the left hand (for example the thumb, the index finger, or the middle finger) toward the "R" switch 42 side (toward the vehicle rear side, the diagonal left rear side of the vehicle, and the diagonal right rear side of the vehicle respectively), even if the driver does not look at the shift device 10.

The driver can accordingly easily identify the positions of the "D" switch 38, the "N" switch 40, and the "R" switch 42 with the fingers of their left hand guided by the guide body 14, without looking at the shift device 10. The "D" switch 38, the "N" switch 40, and the "R" switch 42 are press-operated by the guided fingers of the left hand, thereby enabling incorrect operation of the "D" switch 38, the "N" switch 40, and the "R" switch 42 to be suppressed. This thereby enables the driver to operate the "D" switch 38, the "N" switch 40, and the "R" switch 42 easily, without looking at the shift device 10. This thereby enables any hindrance to the driver driving the vehicle resulting from operation of the "D" switch 38, the "N" switch 40, and the "R" switch 42 to be suppressed.

The "D" switch 38, the "N" switch 40, and the "R" switch 42 are installed at the periphery (in the peripheral vicinity) of the guide body 14. The guide body 14 accordingly guides the fingers of the left hand effectively toward the "D" switch 38 side, the "N" switch 40 side, and the "R" switch 42 side, without the driver looking at the shift device 10, thereby enabling even easier identification of the positions of the "D" switch 38, the "N" switch 40, and the "R" switch 42 , and enabling incorrect operation of the "D" switch 38, the "N" switch 40, and the "R" switch 42 to be further suppressed.

Moreover, during press-operation of the "D" switch 38 by the driver, the fingers of the left hand (for example the thumb, the index finger, or the middle finger) are guided toward the "D" switch 38 side (the vehicle front-rear direction central side of the right recess portion 32) by the right recess portion 32, without the driver looking at the shift device 10.

During press-operation of the "N" switch 40 by the driver, the fingers of the left hand (for example the index finger, or the middle finger) are guided toward the "N" switch 40 side (the vehicle left-right direction central side of the front recess portion 34) by the front recess portion 34, without the driver looking at the shift device 10.

During press-operation of the "R" switch 42 by the driver, the fingers of the left hand (for example the thumb, the index finger, or the middle finger) are guided toward the "R" switch 42 side (the vehicle left-right direction central side of the rear recess portion 36) by the rear recess portion 36, without the driver looking at the shift device 10.

As described above, the driver can easily identify the respective positions of the "D" switch 38, the "N" switch 40, and the "R" switch 42 without looking at the shift device 10, with the fingers of their left hand guided by the right recess portion 32, the front recess portion 34, and the rear recess portion 36. Incorrect operation of the "D" switch 38, the "N" switch 40, and the "R" switch 42 can accordingly be further suppressed.

The "N" switch 40 and the "R" switch 42 are respectively installed at the vehicle front side (one side) and the vehicle rear side (another side) of the guide body 14. The guide body 14 enables the driver to distinguish easily between the "N" switch 40 and the "R" switch 42 without looking at the shift device 10, thereby enabling incorrect operation of the "N" switch 40 and the "R" switch 42 to be suppressed.

The respective press-operation directions of the "D" switch 38, the "N" switch 40, and the "R" switch 42 are each toward the side of the guide body 14. Accordingly, when the driver moves their left hand toward the guide body 14 from the upper side (the front side of the guide body 14) without looking at the guide body 14, the left hand is liable to exert downward force to the "D" switch 38, the "N" switch 40, and the "R" switch 42. Incorrect operation of the "D" switch 38, the "N" switch 40, and the "R" switch 42 can be suppressed, since any force exerted by the left hand toward the sides of the guide body 14 of the "D" switch 38, the "N" switch 40, and the "R" switch 42 is small.

The "D" switch 38, the "N" switch 40, and the "R" switch 42 are arranged in a row around a peripheral direction of the guide body 14. In order to press-operate the "D" switch 38, the "N" switch 40, and the "R" switch 42 with a specific finger of the driver's left hand (for example the thumb, the index finger, or the middle finger), it is therefore necessary to turn the whole left hand, or the specific finger, in the peripheral direction of the installation body 14. This thereby enables incorrect operation of the "D" switch 38, the "N" switch 40, or the "R" switch 42 to be suppressed. Moreover, simultaneous press-operation of two or more out of the "D" switch 38, the "N" switch 40, and the "R" switch 42 can be suppressed, thereby enabling incorrect operation of the "D" switch 38, the "N" switch 40, and the "R" switch 42 to be further suppressed.

In particular, in order for the driver to press-operate the "D" switch 38 and the "R" switch 42 with the thumb of their left hand, it is necessary to turn either the entire left hand, or the thumb, in the peripheral direction of the installation body 14. This thereby enables incorrect operation of the "D" switch 38 and the "R" switch 42, of which incorrect operation could cause the vehicle to move, to be suppressed. Moreover, simultaneous press-operation of the "D" switch 38 and the "R" switch 42 can be suppressed, thereby enabling incorrect operation of the "D" switch 38 and the "R" switch 42 to be further suppressed.

Note that in the present exemplary embodiment, the "D" switch 38, the "N" switch 40, and the "R" switch 42 are respectively installed to the right inner face 32A of the right recess portion 32, the front inner face 34A of the front recess portion 34, and the rear inner face 36A of the rear recess portion 36, and the respective press-operation directions of each of the "D" switch 38, the "N" switch 40, and the "R" switch 42 are toward the side of the guide body 14. However, for example, the "D" switch 38, the "N" switch 40, and the "R" switch 42 may be respectively installed to the right outer face 32B of the right recess portion 32, the front outer face 34B of the front recess portion 34, and the rear outer face 36B of the rear recess portion 36, and the press-operation directions of each of the "D" switch 38, the "N" switch 40, and the "R" switch 42 may be toward the side that is opposite to the guide body 14.

In the present exemplary embodiment, the press-operation directions of each of the "D" switch 38, the "N" switch 40, and the "R" switch 42 are set toward a horizontal direction side (at an angle of inclination with respect to the horizontal plane of 45° or less). However, the press-operation directions of the "D" switch 38, the "N" switch 40, and the "R" switch 42 may be set toward a vertical direction side (at an angle of inclination with respect to the vertical direction of 45° or less).

In the present exemplary embodiment, the additional guide portions are configured by the right recess portion 32, the front recess portion 34, and the rear recess portion 36 that are respectively concave shaped. However, the additional guide portions may be configured with protruding shapes.

### Second Exemplary Embodiment

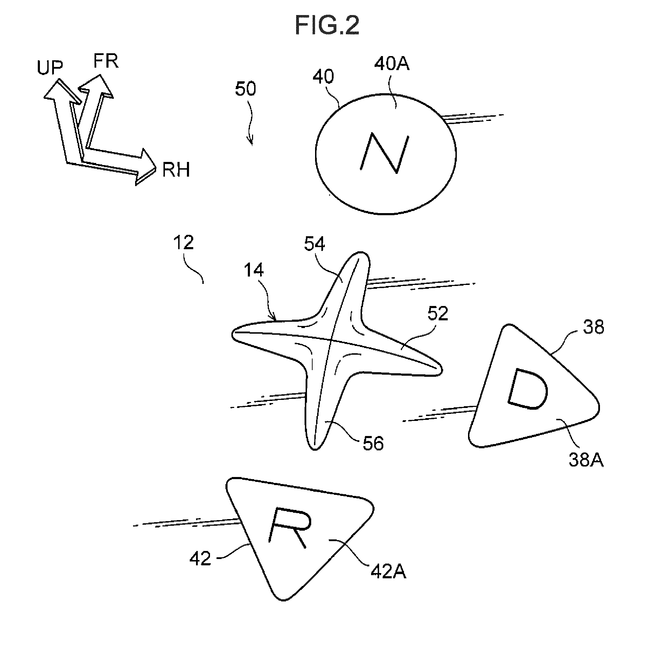

Fig. 2 is a perspective view illustrating a shift device 50 according to a second exemplary embodiment of the present invention, as viewed diagonally from the rear right of a vehicle.

The shift device 50 of the present exemplary embodiment has substantially the same configuration as the first exemplary embodiment; however differs in the following respects.

As illustrated in Fig. 2, in the shift device 50 according to the present exemplary embodiment, a guide body 14 is configured in a substantially cross shape in plan view. The guide body 14 is not provided with the placement face 16 of the first exemplary embodiment described above.

A vehicle right side portion of the guide body 14 configures a substantially triangular pyramid shaped right guide portion 52, serving as a first guide portion. The right guide portion 52 extends toward the vehicle right side, and an upper end of the right guide portion 52 is inclined in a direction toward the lower side on progression toward the vehicle right side.

A vehicle front side portion of the guide body 14 configures a substantially triangular pyramid shaped front guide portion 54, serving as a second guide portion. The front guide portion 54 extends toward the vehicle front side, and an upper end of the front guide portion 54 is inclined in a direction toward the lower side on progression toward the vehicle front side.

A vehicle rear side portion of the guide body 14 configures a substantially triangular pyramid shaped rear guide portion 56, serving as a third guide portion. The rear guide portion 56 extends toward the vehicle rear side, and an upper end of the rear guide portion 56 is inclined in a direction toward the lower side on progression toward the vehicle rear side.

The "D" switch 38 is installed to the installation face 12 in the vicinity of the vehicle right side (driver side) of the right guide portion 52. The "D" operation face 38A of the "D" switch 38 is configured in a triangular flat plane shape, and is disposed in the same plane as the installation face 12. The "D" operation face 38A of the "D" switch 38 is press-operable toward the lower side, and the "D" switch 38 ("D" operation face 38A) is, for example, press-operable by the thumb positioned on the right side of the palm of the driver's left hand.

The "N" switch 40 is installed to the installation face 12 in the vicinity of the vehicle front side of the front guide portion 54. The "N" operation face 40A of the "N" switch 40 is configured in a circular flat plane shape, and is disposed in the same plane as the installation face 12. The "N" operation face 40A of the "N" switch 40 is press-operable toward the lower side, and the "N" switch 40 ("N" operation face 40A) is, for example, press-operable by a finger of the driver's left hand other than the thumb (for example, the index finger, or the middle finger).

The "R" switch 42 is installed to the installation face 12 in the vicinity of the vehicle rear side of the rear guide portion 56. The "R" operation face 42A of the "R" switch 42 is configured in a triangular flat plane shape, and is disposed in the same plane as the installation face 12. The "R" operation face 42A of the "N" switch 40 is press-operable toward the lower side, and the "R" switch 42 ("R" operation face 42A) is, for example, press-operable by the thumb positioned at the lower side of the palm of the driver's left hand, and is press-operable by the thumb when the driver has turned the palm of their left hand toward the right side by approximately 90° to position the thumb at the rear side.

Note that during press-operation of the "D" switch 38 by the driver, the right guide portion 52 of the guide body 14 guides the fingers of the left hand (in particular the thumb, the index finger, or the middle finger) toward the "D" switch 38 side (vehicle right side), even if the driver does not look at the shift device 50.

During press-operation of the "N" switch 40 by the driver, the front guide portion 54 of the guide body 14 guides the fingers of the left hand (for example the index finger, or the middle finger) toward the "N" switch 40 side (the vehicle front side), even if the driver does not look at the shift device 50.

During press-operation of the "R" switch 42 by the driver, the rear guide portion 56 of the guide body 14 guides the fingers of the left hand (for example the thumb, the index finger, or the middle finger) toward the "R" switch 42 side (the vehicle rear side), even if the driver does not look at the shift device 50.

The present exemplary embodiment accordingly enables similar operation and advantageous effects to the first exemplary embodiment, with the exception of operation and advantageous effects due to the right recess portion 32, the front recess portion 34, and the rear recess portion 36.

Note that in the present exemplary embodiment, the guide body 14 may be installed rotated by, for example, 45° about the peripheral direction. In such cases, a first guide portion, a second guide portion, and a third guide portion are configured between the extension portions (such as the right guide portion 52, the front guide portion 54, and the rear guide portion 56) of the guide body 14, and disposing the "D" switch 38, the "N" switch 40, and the "R" switch 42 therein enables the fingers of the driver's left hand to be guided toward the "D" switch 38 side, the "N" switch 40 side, and the "R" switch 42 side.

### Third Exemplary Embodiment

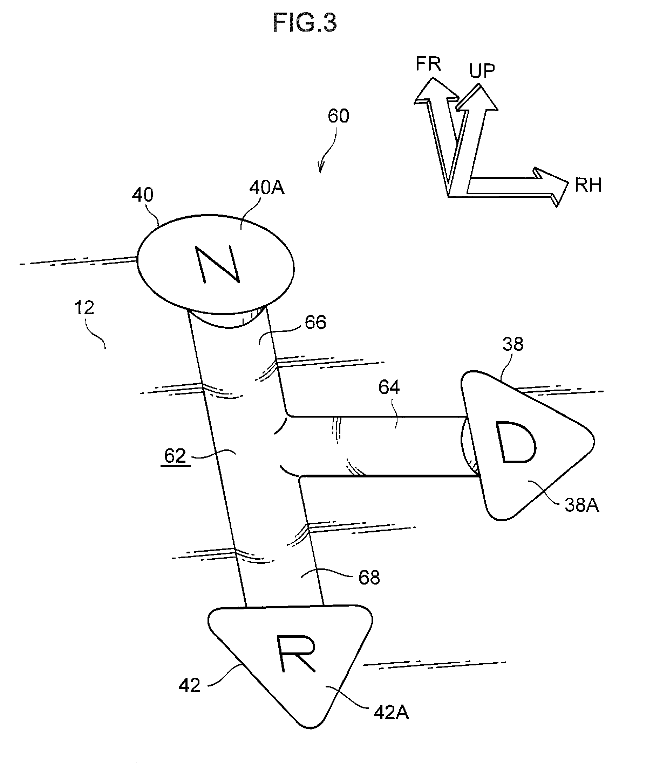

Fig. 3 is a perspective view illustrating a shift device 60 according to a third exemplary embodiment of the present invention, as viewed diagonally from the rear left of a vehicle.

The shift device 60 according to the present exemplary embodiment has substantially the same configuration as the second exemplary embodiment described above; however differs in the following respects.

As illustrated in Fig. 3, the shift device 60 according to the present exemplary embodiment is not provided with the guide body 14 of the second exemplary embodiment described above.

The installation face 12 of the shift device 60 is provided with a guide depression 62 that has a horizontal T-shape in plan view, and that serves as a guide portion.

A vehicle right side portion of the guide depression 62 configures a right guide portion 64, serving as a first guide portion. The right guide portion 64 extends toward the vehicle right side, and a bottom face thereof is curved in a concave shape with a U-shaped cross-section profile.

A vehicle front side portion of the guide depression 62 configures a front guide portion 66, serving as a second guide portion. The front guide portion 66 extends toward the vehicle front side, and a bottom face thereof is curved in a concave shape with a U-shaped cross-section profile.

A vehicle rear side portion of the guide depression 62 configures a rear guide portion 68, serving as a third guide portion. The rear guide portion 68 extends toward the vehicle rear side, and a bottom face thereof is curved in a concave shape with a U-shaped cross-section profile.

The "D" switch 38 is installed to the installation face 12 at a vehicle right side (driver side) of the right guide portion 64. A vehicle right side end of the right guide portion 64 is adjacent to the "D" switch 38.

The "N" switch 40 is installed to the installation face 12 at a vehicle front side of the front guide portion 66. A vehicle front side end of the front guide portion 66 is adjacent to the "N" switch 40.

The "R" switch 42 is installed to the installation face 12 in a vehicle rear side of the rear guide portion 68. A vehicle rear side end of the rear guide portion 68 is adjacent to the "R" switch 42.

Note that during press-operation of the "D" switch 38 by the driver, the right guide portion 64 of the guide depression 62 guides the fingers of the left hand (in particular the thumb, the index finger, or the middle finger) toward the "D" switch 38 side (vehicle right side), even if the driver does not look at the shift device 60.

During press-operation of the "N" switch 40 by the driver, the front guide portion 66 of the guide depression 62 guides the fingers of the left hand (for example the index finger, or the middle finger) toward the "N" switch 40 side (the vehicle front side), even if the driver does not look at the shift device 60.

During press-operation of the "R" switch 42 by the driver, the rear guide portion 68 of the guide depression 62 guides the fingers of the left hand (for example the thumb, the index finger, or the middle finger) toward the "R" switch 42 side (the vehicle rear side), even if the driver does not look at the shift device 60.

The present exemplary embodiment accordingly enables similar operation and advantageous effects to the second exemplary embodiment described above.

Note that the second exemplary embodiment and the third exemplary embodiment may be provided with the right recess portion 32, the front recess portion 34, and the rear recess portion 36 (additional guide portions), and the "D" switch 38, the "N" switch 40, and the "R" switch 42 may be respectively installed to the right recess portion 32 (the right inner face 32A or the right outer face 32B), the front recess portion 34 (the front inner face 34A or the front outer face 34B), and the rear recess portion 36 (the rear inner face 36A or the rear outer face 36B), similarly to in the first exemplary embodiment.

Moreover, in the first exemplary embodiment to the third exemplary embodiment, the "D" operation face 38A of the "D" switch 38, the "N" operation face 40A of the "N" switch 40, and the "R" operation face 42A of the "R" switch 42 are respectively disposed in the same plane as the right inner face 32A or the installation face 12, the front inner face 34A or the installation face 12, and the rear inner face 36A or the installation face 12. However, at least one of the "D" operation face 38A of the "D" switch 38, the "N" operation face 40A of the "N" switch 40, or the "R" operation face 42A of the "R" switch 42 may be disposed out of plane (disposed offset) with respect to the right inner face 32A or the installation face 12, the front inner face 34A or the installation face 12, or the rear inner face 36A or the installation face 12.

In the first exemplary embodiment to the third exemplary embodiment, as viewed face on, the shapes of the "D" operation face 38A of the "D" switch 38, the "N" operation face 40A of the "N" switch 40, and the "R" operation face 42A of the "R" switch 42 may include at least two shapes the same as each other, or may be different to each other. Shapes other than circular shapes, triangular shapes, and rectangular shapes may also be employed.

In the first exemplary embodiment to the third exemplary embodiment, the press-operation direction of at least one of the "D" switch 38 ("D" operation face 38A), the "N" switch 40 ("N" operation face 40A), or the "R" switch 42 ("R" operation face 42A) may be angled with respect to the respective orthogonal directions of the at least one of the "D" operation face 38A, the "N" operation face 40A , or the "R" operation face 42A.

In the first exemplary embodiment to the third exemplary embodiment, at least one of the "D" operation face 38A of the "D" switch 38, the "N" operation face 40A of the "N" switch 40, or the "R" operation face 42A of the "R" switch 42 may be provided with a convex portion or a recess portion. This thereby enables the driver to easily identify the position of the at least one of the "D" operation face 38A, the "N" operation face 40A, or the "R" operation face 42A by discerning the recess portion or convex portion with their left hand (and the fingers thereof), without looking at the installation body 14. This thereby enables improved ease of operation of at least one of the "D" operation face 38A, the "N" operation face 40A, or the "R" operation face 42A.

The "D" switch 38, the "N" switch 40, and the "R" switch 42 are installed in the first exemplary embodiment to the third exemplary embodiment. However, configuration may be made such that any one out of the "D" switch 38, the "N" switch 40, or the "R" switch 42 is not installed. Moreover, switches other than the "D" switch 38, the "N" switch 40, and the "R" switch 42 may be additionally installed (for example, a "P" switch (parking switch) that is operated to place the shift range of the automatic transmission in a "P" range (parking range)). Moreover, another switch may be installed in the place of any out of the "D" switch 38, the "N" switch 40, or the "R" switch 42.

In the first exemplary embodiment to the third exemplary embodiment, the vehicle is configured as a right-hand drive vehicle, and the "D" switch 38 is disposed at the vehicle right side of the "N" switch 40 and the "R" switch 42. However, if the vehicle is configured as a left-hand drive vehicle, the vehicle left-right direction of the shift device 10, 50, 60 may be reversed, and, for example, the "D" switch 38 may be disposed at the vehicle left side of the "N" switch 40 and the "R" switch 42.

Moreover, in the first exemplary embodiment to the third exemplary embodiment, the shift device 10, 50, 60 is a floor-mounted type, and is located on the floor section of the vehicle compartment. However, the shift device 10, 50, 60 may be located on a steering column or instrument panel of the vehicle.

The entire contents of the disclosure of Japanese Patent Application No. 2012-268703, filed on December 7, 2012, are incorporated by reference in the present specification

### Explanation of the Reference Numerals

- 10: shift device
- 14: guide body (guide portion)
- 32: right recess portion (additional guide portion)
- 34: front recess portion (additional guide portion)
- 36: rear recess portion (additional guide portion)
- 38: "D" switch (switch)
- 40: "N" switch (switch)
- 42: "R" switch (switch)
- 50: shift device
- 60: shift device
- 62: guide depression (guide portion)

## Claims

1. A shift device, comprising:
a plurality of switches that are operated to change a shift range of a transmission; and
a guide portion capable of guiding a hand to respective sides of the plurality of switches.

2. The shift device of claim 1, wherein the switch is installed at a periphery of the guide portion.

3. The shift device of claim 1 or claim 2, wherein the switches are installed at one side and another side of the guide portion.

4. The shift device of any one of claim 1 to claim 3, wherein the switch is operated toward a side of the guide portion, or is operated toward a side that is opposite to the guide portion.

5. The shift device of any one of claim 1 to claim 4, further comprising an additional guide portion that is provided at a periphery of the switch, and that is capable of guiding the hand to a side of the switch.

6. The shift device of any one of claim 1 to claim 5, wherein the plurality of switches are installed around a peripheral direction of the guide portion.

7. The shift device of any one of claim 1 to claim 6, wherein the switches are installed so as to be separated from each other around a peripheral direction of the guide portion.

8. The shift device of any one of claim 1 to claim 7, wherein the guide portion projects outward, and a projection amount of the guide portion decreases toward a side of the switch.

9. The shift device of any one of claim 1 to claim 8, wherein the guide portion is capable of guiding the hand in a peripheral direction of the guide portion.

10. The shift device of any one of claim 1 to claim 9, wherein the guide portion extends toward the switch.
